# EUROPEAN PATENT SPECIFICATION

(11) **EP 1 331 029 B1**
(45) Date of publication and mention of the grant of the patent: **20.09.2006**
(21) Application number: 02024505.6
(22) Date of filing: 30.10.2002
(51) Int. Cl.: B01D 29/27, B01D 35/30

(54) **Filter bag sealing arrangement**
Dichtungsanordnung für Filtersack
Dispositif d'étanchéité pour sac filtrant

(30) Priority: 25.01.2002 US 57761
(43) Date of publication of application: 30.07.2003
(73) Proprietor: Howard W. Morgan, Filter Specialists, Incorporated, Michigan City, Indiana 46361 (US)
(72) Inventor: Howard W. Morgan, Filter Specialists, Incorporated, Michigan City, Indiana 46361 (US)
(74) Representative: Grünecker, Kinkeldey, Stockmair & Schwanhäusser Anwaltssozietät

(56) References cited:
- EP-A- 0 202 725
- NL-A- 8 603 315
- US-A- 4 460 468
- US-A- 4 986 912

## Description

This is a Continuation of Provisional Application Serial Number 60/267,503, Filed February 8, 2001

### SUMMARY OF THE INVENTION

This invention relates to a liquid filter and will have particular application to a filter in which the cover is sealed to the filter housing by the filter bag.

In the US patent US 4,460,468 a liquid filter with a unitary lid to a housing seal and filtration bag is revealed. The seal therein is used as a gasket between the filter housing and the lid and is attached about the open upper end of the bag.

In this invention the filter bag is provided with an opening defined by a flexible shape-retaining edge portion or ring. The edge portion is liquid impervious and includes a bead. The filter bag is usually supported within a basket suspended within the filter housing. The bag edge portion includes an outturned flange which carries the bead and which is located between the cover and the filter housing, overlying the basket. The cover compresses the bead against the filter housing to form the seal between the cover and the housing.

Accordingly, it is an object of this invention to provide a liquid filter in which the filter bag provides the only liquid seal between the cover and the filter housing.

Another object of this invention is to provide a liquid filter having a cover, which carries no liquid seal part.

Other objects of this invention will become apparent upon a reading of the following description.

### BRIEF DESCRIPTION OF THE DRAWINGS

A preferred embodiment of this invention has been chosen wherein:

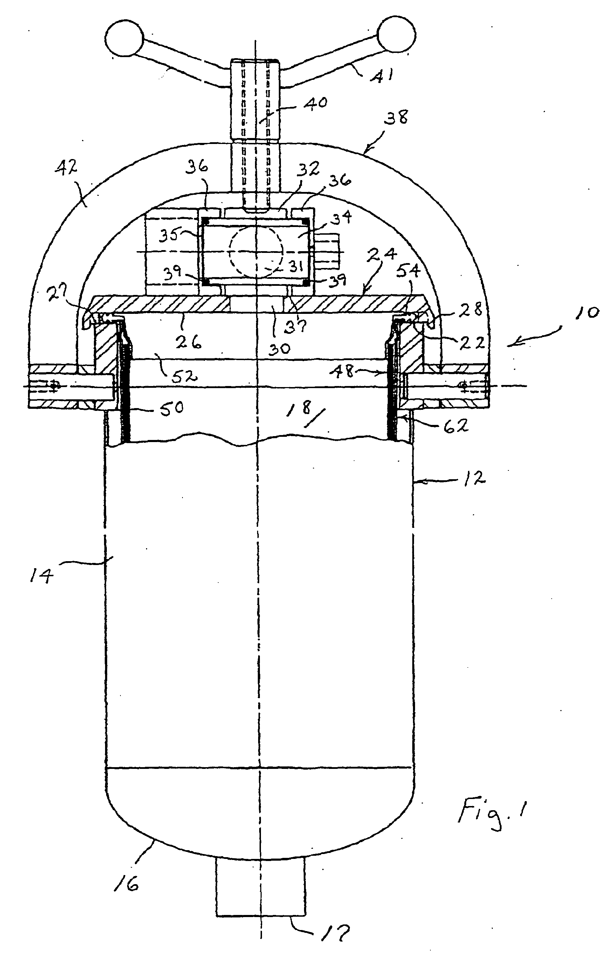

Figure 1 is a side view of a liquid filter of this invention having portions sectionalized for illustrative purposes.

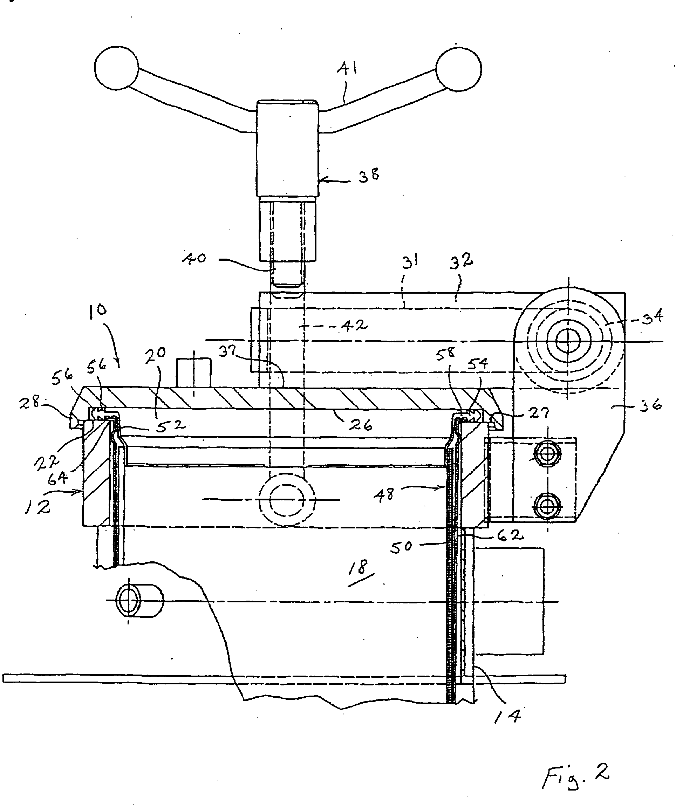

Figure 2 is a fragmentary sectional view of the filter as seen from the side of figure 1.

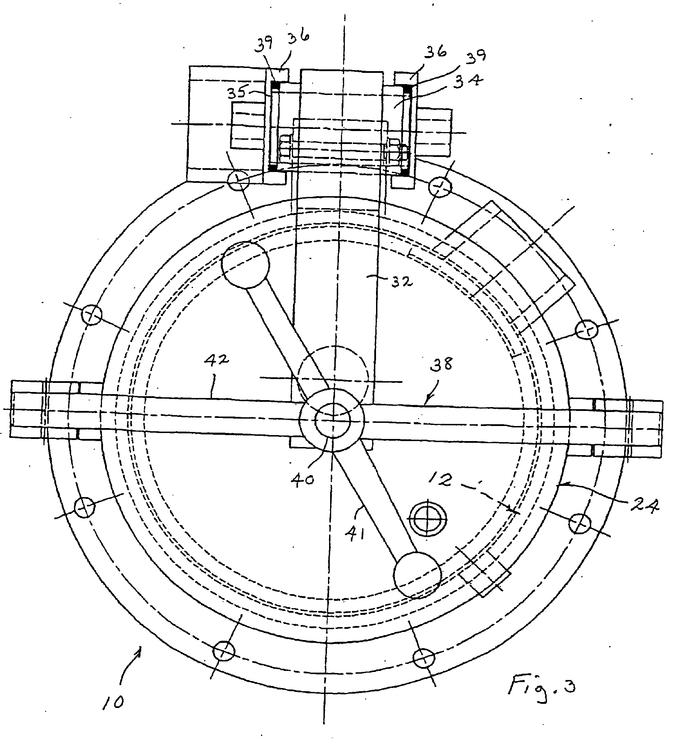

Figure 3 is a top view of the filter.

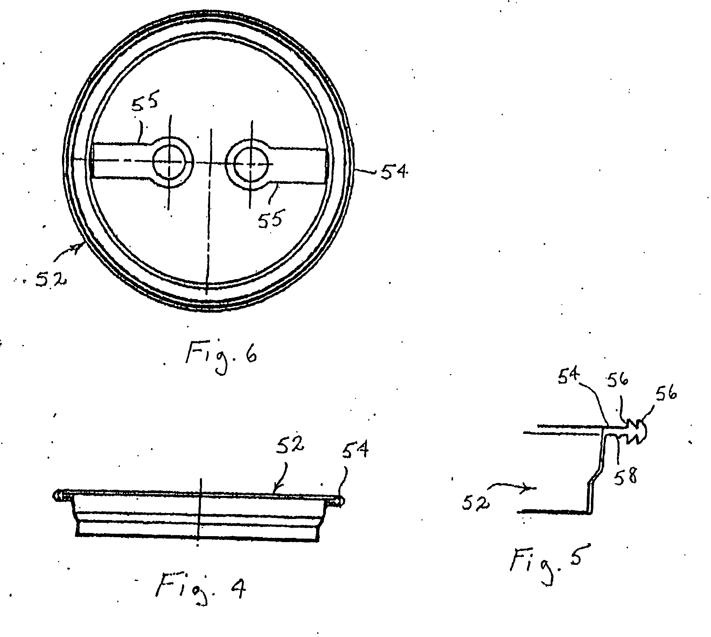

Figure 4 is a cross-sectional view of the ring or edge portion of the filter bag used in the filter shown in figure 1.
Figure 5 is a fragmentary enlarged view of the bag ring or edge portion of figure 4.
Figure 6 is a top view of the bag ring or edge portion.

### DESCRIPTION OF THE PREFERRED EMBODIMENT

Filter 10 illustrated in the drawings includes a housing 12 having an annular sidewall 14 and a bottom wall 16. An outlet port 17 is located in bottom wall 16 with sidewall 14 defining an internal chamber 18. The sidewall 14 forms an opening 20 into internal chamber 18 and is defined by an upper flat end edge 22 forming a support. The opening 20 in the housing is spanned by a top or cover 24. The inner surface 26 of cover 24 is flat or planar and terminates at its outer peripheral edge in a down turned annular lip 28. An inlet port 30 is formed in cover 24. Cover 24 is connected to housing 12 by a pivot arm 32. Pivot arm 32 is pivotally connected at one end by an attached pivot tube 34 to a bracket 36 that is connected to housing side wall 14. The other end of pivot arm 32 is connected to cover 24 at 37. Tube 34 is open at end 35 to receive the liquid that passes through filter 10 and is fixed to arm 32. Pivot arm 32 has an internal bore 31 that extends from the interior of tube 34 to inlet port 30 in cover 24. As arm 32 pivots, tube 34 rotates within bracket 36. Liquid leakage between tube 34 and bracket 36 is prevented by ring seals 39. Liquid enters tube open end 35, passes through arm bore 31, and enters housing internal chamber 18 through inlet port 30 in the cover.

Pivot arm 32 allows cover 24 to be moved between the closed position shown in the figures and an open position in which the cover is lifted from housing 12 to allow replacement or cleaning of the filter bag 48 and basket 62. Cover 24 is secured in its closed position over housing opening 20 by a clamp 38. The clamp 38 includes a turn bolt 40 carried by an arched support 42, which is pivotally connected to housing 12. When turn bolt 40 is rotated by its handle 41, it can be brought into contact with pivot arm 32 at cover connection 37 to urge the cover into contact at its shoulder 27 with upper end edge 22 of the housing. Arch support 42 can be pivoted away from the cover 24 when turn bolt 40 is loosened and freed from the cover. This allows the cover to be raised and supported in its raised position by pivot arm 32.

Filter bag 48 includes a wall part 50 which is formed of a flexible, liquid pervious material such as spun plastic, wool or cotton. Bag 48 further includes a ring part or edge portion 52 formed of a flexible shape-retaining material such as nylon or polypropylene. The bag ring 52 forms the opening into the bag and is attached to wall part 50 such as by sewing or heat sealing. Ring 52 also includes an outturned flange 54 which terminates in juxtaposed annular beads 56. Beads 56 are preferably triangular shaped in cross section. Flange 54 also includes an annular rib 58 that is inwardly spaced from beads 56. Bag 48 includes a pair of pull tabs 55 to assist in the removal of the bag from housing 12. Basket 62 is positioned in internal chamber 18 of housing 12 and includes a flange 64 which is outturned and which supports the basket within the filter housing by resting upon in the edge 22 of the housing. Basket 62 is of a rigid shape-retaining construction and of reticulated form.

Bag 48 fits within basket 62 with its flange 54 overlying basket flange 64 and end edge 22 of housing 12. Beads 56 contact edge 22 at a location outwardly spaced from the basket flange 64 with rib 58 the bag flange 54 contacting the basket flange to anchor the basket against housing end edge 22. Inner surface 26 of cover 24 overlies and contacts beads 56 of the bag ring. As turn bolt 40 is rotated to urge cover 24 downwardly toward housing 12, beads 56 are compressed between cover inner surface 26 and in the end edge 22 of housing 12 to form the seal between the cover and housing. Cover 24 is urged by turn bolt 40 towards housing end edge 22 until shoulder 27 of the cover contacts the housing end edge in abutment with beads 56 in compression. In this manner, cover 24 is not required to carry any sealing ring in order to form a seal between the cover and housing. In this invention, this seal is provided by the filter bag.

This invention is not to be limited to the details above given but may be modified within the scope of the appended claims.

## Claims

1. A liquid filter (10) comprising a housing (12) defining a chamber (18) therein, said housing (12) having an upper opening (20) into its said chamber (18), a cover (24) spanning said housing opening, said housing (12) including a flat support (22) extending about the housing opening (20), inlet and outlet ports located in liquid flow communication through said chamber (18), a filter bag (48) for filtering liquid having an opening defined by a flexible bag ring (52), said bag ring (52) being liquid impervious and including an outturned annular flange (54), said flange (54) carrying an annular bead (56), said bag located within said chamber (18) and having its said flange (54) located between said housing support (22) and said cover (24), said cover (24) compressing said bead (56) against said housing support (22), said bead (56) forming the liquid seal between said cover (24) and housing (12) about said housing opening, a reticulated basket (62) having an opening therein, said basket (62) fitted within said chamber (18), said basket (62) contacting and overlying said housing support (22), said bag extending into said basket (62) and having its said flange (54) overlying and contacting said basket (62) about said basket (62) opening, wherein said basket (62) includes an outturned flange contacting said housing support (22), said bag flange (54) contacting said basket flange (64), **characterised in that** the flexible bag ring (52) is formed of a flexible shape-retaining material and said bag flange (54) includes a second annular bead (56) located inwardly from said first mentioned bead (56), said first mentioned and second beads (56) located between and contacting said cover (24) and said housing support (22)

2. The liquid filter (10) of claim 1 wherein said bag flange (54) includes an annular rib (58) inwardly spaced from said bead (56), said rib contacting said basket flange (64) to urge the basket flange (64) against said housing support (22).

3. The liquid filter (10) of at least one of the claims 1 or 2, wherein said cover (24) contacts said housing (12).

4. The liquid filter (10) of at least one of the claims 1 to 3, wherein said cover (24) contacts said housing (12) at said housing support (22) outwardly of said bag ring (52).

## Patentansprüche

1. Flüssigkeitsfilter (10) umfassend ein Gehäuse (12), welches in diesem eine Kammer (18) definiert, wobei das Gehäuse (12) eine obere Öffnung (20) in die Kammer (18), eine Abdeckung (24), welche die Öffnung des Gehäuses (20) umspannt, umfasst, das Gehäuse eine flachen Auflage (22) umfasst, welche sich um die Gehäuseöffnung erstreckt, Einlass- und Auslassöffnungen, welche in Flüssigkeitsdurchflussverbindung durch die Kammer (18) angeordnet sind, einen Filterbeutel (48) zum Filtem der Flüssigkeit, welcher eine Öffnung aufweist, die durch einen flexiblen Beutelring (52) definiert wird, wobei der Beutelring (52) flüssigkeitsundurchlässig ist und einen kreisförmigen nach außen weisenden Flansch (54) umfasst, wobei der Flansch (54) eine kreisförmige Wulst (56) trägt, der Beutel innerhalb der Kammer (18) angeordnet ist, und wobei dessen Flansch (54) zwischen der Gehäuseauflage (22) und der Abdeckung (24) angeordnet ist, wobei die Abdeckung (24) die Wulst (56) gegen die Gehäuseauflage (22) drückt, wobei die Wulst (56) eine Flüssigkeitsdichtung zwischen der Abdeckung (24) und dem Gehäuse (12) um die Gehäuseöffnung herum bildet, einen netzartigen Korb (62) mit einer Öffnung darin, wobei der Korb (62) innerhalb der Kammer (18) angeordnet ist, der Korb (62) mit der Gehäuseauflage (22) in Kontakt steht und auf dieser liegt, wobei sich der Beutel in den Korb (62) erstreckt und wobei dessen Flansch (54) den Korb (62) um die Korb (62)-öffnung überragt und mit dieser in Kontakt steht, wobei der Korb (62) einen nach außen weisenden Flansch umfasst, der mit der Gehäuseauflage (22) in Kontakt steht, wobei der Beutelflansch (54) mit dem Korbflansch (64) in Kontakt steht, **dadurch gekennzeichnet, dass** der flexible Beutelring (52) aus einem flexiblen formhaltenden Material gebildet ist und dass der Beutelflansch (54) eine zweite kreisförmige Wulst (56) umfasst, die einwärts von der ersten genannten Wulst (56) angeordnet ist, wobei die erste genannte und die zweite Wulst (56) zwischen der Abdeckung (24) und der Gehäuseauflage (22) angeordnet sind und mit diesen in Kontakt stehen.

2. Flüssigkeitsfilter (10) nach Anspruch 1, wobei der Beutelflansch (54) eine kreisförmige Rippe (58) umfasst, die von der Wulst (56) nach innen beabstandet ist, wobei die Rippe mit dem Korbflansch (64) in Kontakt steht, um den Korbflansch (24) gegen die Gehäuseauflage (22) zu drängen.

3. Flüssigkeitsfilter (10) nach wenigstens einem der Ansprüche 1 oder 2, wobei die Abdeckung (24) mit dem Gehäuse (12) in Kontakt steht.

4. Flüssigkeitsfilter (10) nach wenigstens einem der Ansprüche 1 bis 3, wobei die Abdeckung (24) mit dem Gehäuse (12) an der Gehäuseauflage (22) außerhalb des Beutelrings (52) in Kontakt steht.

## Revendications

1. Filtre à liquide (10) comprenant un boîtier (12) définissant une chambre (18) à l'intérieur de celui-ci, ledit boîtier (12) ayant une ouverture supérieure (20) à l'intérieur de sa dite chambre (18), un couvercle (24) recouvrant ladite ouverture de boîtier, ledit boîtier (12) comprenant un support plat (22) s'étendant sur l'ouverture de boîtier (20), des orifices d'entrée et de sortie situés en communication d'écoulement liquide à travers ladite chambre (18), un sac filtrant (48) pour filtrer du liquide ayant une ouverture définie par une bague de sac flexible (52), ladite bague (52) étant imperméable au liquide et comprenant un rebord annulaire tourné vers l'extérieur (54), ledit rebord (54) portant un bourrelet annulaire (56), ledit sac situé à l'intérieur de ladite chambre (18) et ayant son dit rebord (54) situé entre ledit support de boîtier (22) et ledit couvercle (24), ledit couvercle (24) comprimant ledit bourrelet (56) contre ledit support de boîtier (22), ledit bourrelet (56) formant le joint d'étanchéité au liquide entre ledit couvercle (24) et le boîtier (12) sur ladite ouverture de boîtier, un panier réticulé (62) ayant une ouverture à l'intérieur de celui-ci, ledit panier (62) fixé à l'intérieur de ladite chambre (18), ledit panier (62) se trouvant en contact avec et recouvrant ledit support de boîtier (22), ledit sac s'étendant à l'intérieur dudit panier (62) et ayant son dit rebord (54) recouvrant et se trouvant en contact avec ledit panier (62) sur ladite ouverture de panier (62), dans lequel ledit panier (62) comprend un rebord tourné vers l'extérieur se trouvant en contact avec ledit support de boîtier (22), ledit rebord de sac (54) se trouvant en contact avec ledit rebord de panier (64), **caractérisé en ce que** la bague de sac flexible (52) est formée d'un matériau flexible à mémoire de forme et ledit rebord de sac (54) comprend un second bourrelet annulaire (56) situé vers l'intérieur depuis ledit premier bourrelet mentionné (56), lesdits premier et second bourrelets mentionnés (56) situés entre et se trouvant en contact avec ledit couvercle (24) et ledit support de boîtier (22).

2. Filtre à liquide (10) selon la revendication 1 dans lequel ledit rebord de sac (54) comprend une nervure annulaire (58) vers l'intérieur espacée dudit bourrelet (56), ladite nervure se trouvant en contact avec ledit rebord de panier (64) pour pousser le rebord de panier (64) contre ledit support de boîtier (22).

3. Filtre à liquide (10) selon au moins une des revendications 1 ou 2, dans lequel ledit couvercle (24) se trouve en contact avec ledit boîtier (12).

4. Filtre à liquide (10) selon au moins l'une quelconque des revendications 1 à 3, dans lequel ledit couvercle (24) se trouve en contact avec ledit boîtier (12) au niveau dudit support de boîtier (22) vers l'extérieur de ladite bague de sac (52).
